# EUROPEAN PATENT APPLICATION

(11) **EP 0 823 339 A2**
(43) Date of publication of application: **11.02.1998**
(21) Application number: 97113652.8
(22) Date of filing: 07.08.1997
(51) Int. Cl.: B60C 9/00

(54) **Method for improving steel reinforced material for tires and product produced by the method**

(30) Priority: 09.08.1996 US 694880
(71) Applicant: MICHELIN RECHERCHE ET TECHNIQUE S.A., CH-1763 Granges-Paccot (CH)
(72) Inventor: Hetzel, Peter Denez, Lexington, South Carolina 29072-7559 (US)
(74) Representative: Dequire, Philippe Jean-Marie Denis

(57) **Abstract**

A method for treating a steel reinforced material of a cured tire and a tire improved by the method are provided. The method includes applying a tensile force to the steel reinforced material of a magnitude equal to that of a tensile force applied thereon when the tire is subjected to an inflation pressure greater than one hundred and ten percent (110%) of the nominal inflation pressure yet of a magnitude less than the tensile strength of the steel reinforced material. Thereafter, the method provides that the application of the tensile force to the steel reinforced material is maintained for a predetermined period, whereby a characteristic of the growth of cracks in the steel reinforced material is altered.

## Description

The present invention relates to a method for improving the fatigue resistance of a steel reinforced material of the type for reinforcing a rubber article such as a tire and to an improved rubber article such as a tire.

Tires of the pneumatic type typically include a carcass ply comprised of steel reinforced material such as wire or cable embedded in an elastomeric material. The wire or cable imparts desirable reinforcement characteristics to the tire and it is a common practice in particular with truck tires to provide such reinforcements in the form of steel wires or cables. However, steel wires or cables are susceptible to cyclic fatigue damage up to fraying or even rupture. Although the performance of a tire may deteriorate for a reason other than a deterioration in the capabilities of its reinforcement wires or cables, it is possible that the tire performance deterioration may first appear due to the deterioration in the wire or cable capability.

It is known that the cyclic loading and unloading of a tire causes and exacerbates the type of fatigue cracks which ultimately cause the fatigue failure. However, the growth of such fatigue cracks increases throughout the life of the tire and the embedded nature of such wires or cables makes it technically or economically undesirable to access the wires or cables so as to intervene directly against the cracks. Thus, the need exists for a method for improving the fatigue resistance of a steel reinforced material for a tire without adversely impacting the performance and cost efficient use of a tire.

The present invention improves the fatigue resistance of steel reinforced materials such as wires or cables in a tire by providing, one aspect of the present invention, a method for treating a steel reinforced material of a cured tire in which the steel reinforced material extends annularly relative to the axis of rotation of the tire, the tire being adapted for use on a vehicle at a prescribed nominal inflation pressure. The method includes applying a tensile force to the steel reinforced material of a magnitude equal to that of a tensile force applied on the steel reinforced material when the tire is subjected to an inflation pressure greater than one hundred and ten percent (110%) of the nominal inflation pressure yet of a magnitude less than the tensile strength of the steel reinforced material. Additionally, the method includes the step of maintaining the application of the tensile force to the steel reinforced material for a predetermined period, whereby a characteristic of the growth of cracks in the steel reinforced material is altered.

According to another aspect of the present invention, there is provided a method for treating a steel reinforced material of a cured tire in which the steel reinforced material extends annularly relative to the axis of rotation of the tire, the tire for supporting, at a prescribed nominal inflation pressure, a vehicle on a ground surface. The method includes inflating the tire to a pressure of between about 110% to about 300% of its nominal inflation pressure for a predetermined overinflation period.

According to a further aspect of the present invention, there is provided a tire having at least one steel reinforced material, the tire being of the type which supports, at a prescribed nominal inflation pressure, a vehicle on a ground surface. The tire includes steel reinforced materials whose fatigue resistance has been improved by inflating the tire to a pressure of between about 110% to about 300% of its nominal inflation pressure for a predetermined overinflation period.
Figure 1A is a perspective view of a cured tire mounted on a rim, the tire being shown in an inflated unloaded condition and the arrows schematically illustrating the distribution of the forces exerted by the inflation gas on the tire;
Figure 1B is a perspective view of a cured tire mounted on a rim, the tire being shown in an inflated and loaded condition as exists when the tire supports a vehicle on a ground surface and the arrows schematically illustrating the distribution of the forces exerted by the inflation gas on the tire during rolling contact of the tire along the ground surface;
Figure 2A is an enlarged perspective cross-sectional view of an angular portion of the tire shown in Figure 1B;
Figure 2B is an enlarged perspective view of an extent of a steel reinforced material of the tire shown in Figure 2A, the steel reinforced material being in the form of a wire and having, as schematically shown, a plurality of cracks;
Figure 2C is an enlarged perspective view of the end portion of the extent of the steel reinforced material of the tire shown in Figure 2B;
Figure 2D is an enlarged perspective view of an incremental element of the carcass ply of the tire shown in Figure 2A and showing the individual extents of several wires of the carcass ply of the tire;
Figure 2E is a graphical representation of the tensile, compressive, and circumferential components of a force applied to the wires shown in Figure 2D to create a higher than normal stress in the wires according to the method of the present invention;
Figure 3 is a graphical representation of the predicted stress-strain behavior of the wire shown in Figure 2B;
Figure 4 is an enlarged perspective cross-sectional view of the tire shown in Figure 2A taken along lines 4 - 4 thereof and showing in the profile of the tire in dashed lines in an overinflated condition thereof in accordance with the method of the present invention;
Figure 5 is a graphical representation of the improved resistance to fatigue of several tires having steel reinforced materials treated in accordance with the method of the present invention;
Figure 6A is a graphical representation of the stress history of a steel reinforced material treated in accordance with one treatment protocol of the method of the present invention;
Figure 6B is a graphical representation of the stress history of a steel reinforced material treated in accordance with another treatment protocol of the method of the present invention; and
Figure 6C is a graphical representation of the stress history of a steel reinforced material treated in accordance with a further treatment protocol of the method of the present invention.

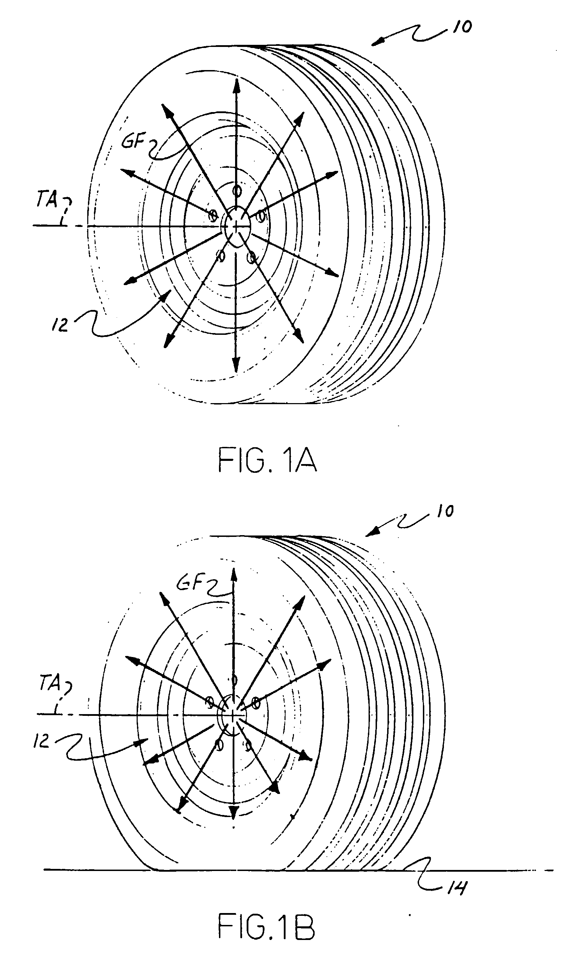

The present invention provides a method for treating a steel reinforced material of the type for reinforcing a cured rubber or elastomeric product such as, for example, a vulcanized tire. The method of the present invention, as well as a product produced in accordance with the method, will now be described in more detail with reference to Figures 1-6.

As seen in Figure 1A, a pneumatic tire 10 is shown in a mounted and inflated disposition on a rim 12. The pneumatic tire 10 and the rim 12 are designed to cooperate with one another in known manner to help support the weight of a vehicle such as, for example, a passenger car, a light truck, a van, a truck, or an aircraft. However, the pneumatic tire 10 and the rim 12 as shown in Figure 1A, are not yet operatively coupled to a vehicle. Thus, the pneumatic tire 10 is in its inflated yet unloaded condition and it can be seen, as schematically illustrated by the arrows GF, that the inflation gas in the tire exerts a uniform radially outward pressure on the pneumatic tire 10 relative to the rotational axis TA of the tire and rim assembly - in other words, the sum of all of the radially outward forces GF is zero.

In contrast, as seen in Figure 1B, when the pneumatic tire 10 is in its inflated and loaded condition - i.e., when the tire 10 and the rim 12 are operatively mounted on an axle of a vehicle (not shown) - the result of the forces exerted by the inflation gases on the rim is no longer equal to zero. Instead, that portion of pneumatic tire 10 which is instantaneously in contact with a ground surface 14 is deflected radially inwardly relative to the rotation axis TA. Conversely, the portion of the pneumatic tire 10 diametrically opposite to the portion in contact with the ground surface 14 is subjected to a radially outward force which tends to place that diametrically opposite tire portion in tension.

Since the pneumatic tire 10 when rotating is continuously in rolling contact with the ground surface 14, each portion of the tire is cyclicly subjected to a relatively lower load while in rolling contact and then subjected to tension as it passes through a position diametrically opposite to its rolling contact position. These cyclic compression and tension forces on the portions of the tire lead to fluctuating stresses in the materials which comprise the tire. In the particular situation of the reinforcement materials of the tire, the steel reinforced materials in the form of single or multi strand wires or cables are thus cyclicly loaded or stressed and this cyclic loading ultimately leads to a fatigue failure situation in which the wires or cables fray or rupture completely.

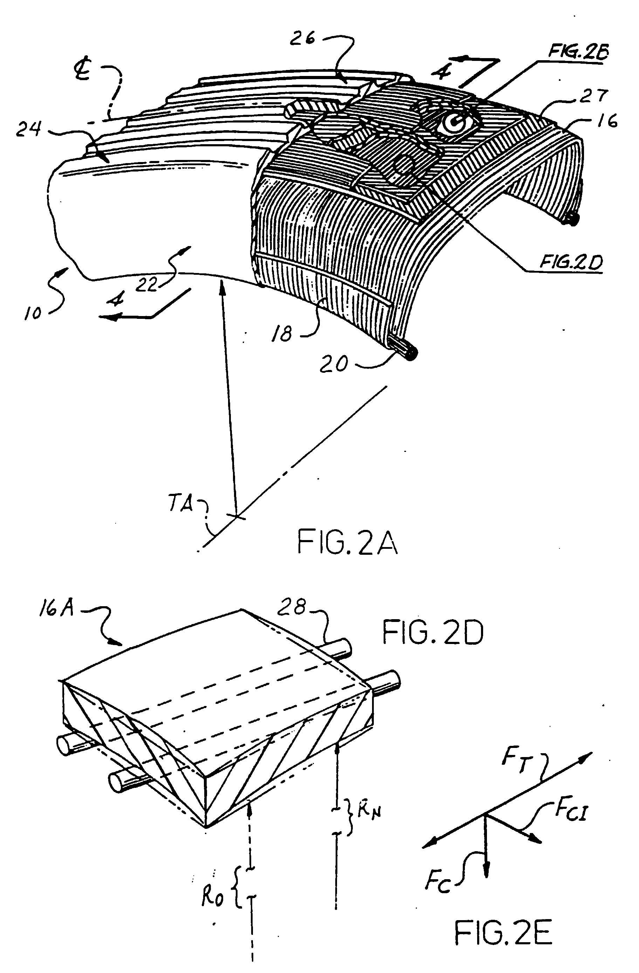

The elongate reinforcement materials of a tire subject to such cyclic fatigue are typically found in the carcass plies of a tire. For example, as seen in more detail in Figure 2A, the pneumatic tire 10 is comprised of at least one carcass ply 16 having ends 18 each turned up around one of a pair of inextensible annular bead members 20 (only one of which is shown in Figure 2A). The bead members 20 securely mount the pneumatic tire 10 on the rim 12. The pneumatic tire 10 additionally includes a pair of sidewall portions 22 each extending from a location adjacent a bead member 20 to a shoulder region 24 at which the sidewall portion 22 is joined with a tread portion 26. The tread portion 26 forms the portion of the pneumatic tire 10 which is in contact with the ground surface 14 during rolling movement of the tire and the tread portion 26 may include conventional tire tread sculpture features such as, for example, circumferential or lateral grooves, sipes, or lamelles. The pneumatic tire 10 also includes a plurality of circumferentially extending crown reinforcement belts or plies 27 which are disposed radially intermediate the carcass ply 16 and the tread portion 26.

As seen in enlarged detail in Figure 2D, the carcass ply 16 is formed of a plurality of steel reinforced materials in the form of wires 28. Each of the wires 28 are surrounded by elastomeric material (commonly referred to as a skim) such that the elastomeric material and the wires together form the carcass ply 16. As seen in Figure 2A, the pneumatic tire 10 is of the radial type characterized by the fact that the wires 28 of the carcass ply 16 extend at an angle of 90 degrees, or within one or two degrees of 90 degrees, relative to the centerline CL of the tire. It is to be understood, however, that a pneumatic tire susceptible to improved performance by virtue of the method of the present invention may as well be of the bias type in which case the wires 28 would extend at a relative small acute angle with respect to the centerline CL of the tire.

Each wire 28 may comprise a single strand of a steel-based material or may comprise multiple strands of a steel-based material. Additionally, each wire 28 is preferably treated according to a conventional wire treatment method so as to promote the suitably of the wire in its reinforcing role in the carcass ply 16. For example, each wire 28 may be treated by a conventional brass coating treatment so as to promote better adhesion between the wire and the surrounding elastomeric skim material.

Referring further to the impact of the cyclic compression and tensile forces on the wires 28 of the carcass ply 16, each wire may experience tensile forces of between about 12 to 15.9 deca-newton (daN) when the respective portion of the tire in which the wire extends is out of contact with the ground surface 14. Conversely, when the respective portion of the tire in which the wire is located is in contact with the ground surface 14, the tensile forces on the wires are less - i.e., these tensile forces are in the range of 7.5 to 10 daN. Even though the tensile force at the upper range of 15.9 daN is nearly twice the tensile force that the wire may experience during the time that the respective portion of the tire is in contact with the ground surface 14, all of these tensile forces are less than the tensile breaking strength of the wire. Nonetheless, due to the cyclic compression and tension force applications to the wire caused by the phenomena described above during rolling contact of the inflated and loaded tire with the ground surface 14, fatigue cracks are created in the wires 28 which ultimately may lead to fraying or complete rupture of the wires.

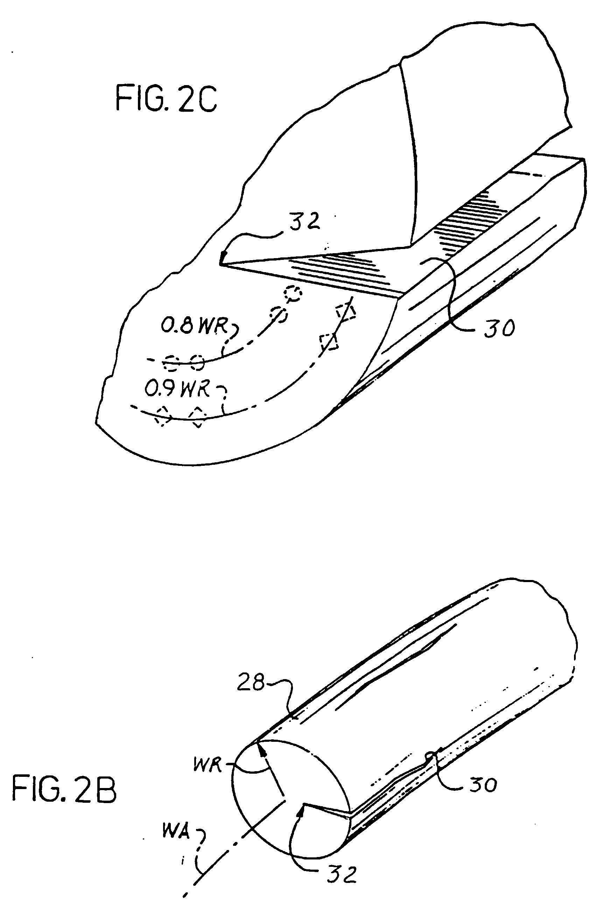

As seen in the enlarged view of an end portion of a reinforcement wire 28 in Figure 2B, a crack 30 created by such cyclic loading and unloading of the wire 28 may start at the outer surface of the wire and progress in a radial inward direction as the cyclic loading and unloading continues. As seen in Figure 2B and in a further enlargement of the wire end portion in Figure 2C, the crack 30 propagates at a crack tip 32 radially interiorly of the wire 28 and, additionally, may propagate generally in a lengthwise direction as well along the wire.

The propagation of a crack such as the crack 30 is due to the presence of an area of stress concentration at the crack tip which overcomes the yield strength of the steel-based material surrounding the crack tip. The rate of propagation of a crack may be non-uniform and may never reach a level at which the crack propagates to the extent that an ultimate failure of the wire is caused or the conditions for such are created. However, it can be understood that the propagation of a single crack to some appreciable extent may be all that is necessary to cause or set up wire damage or failure of the wire.

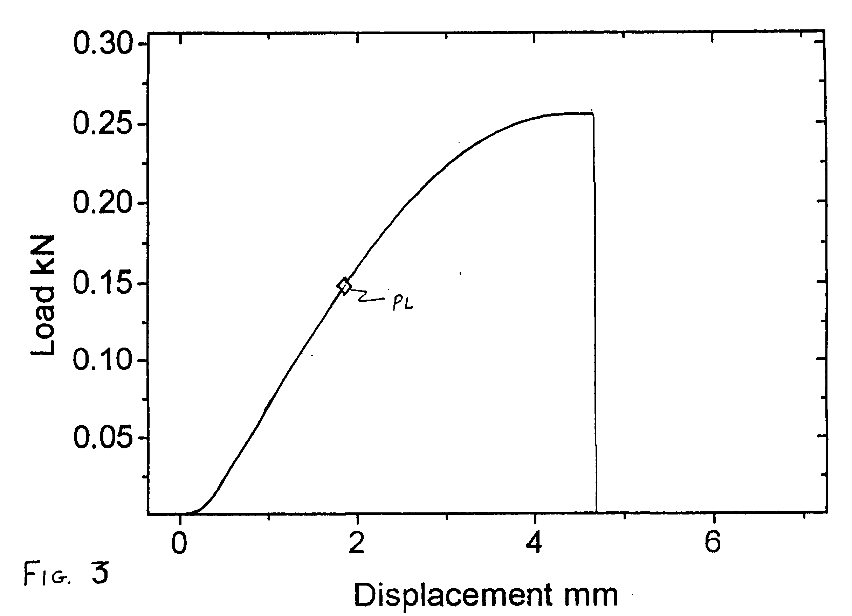

Figure 3 is a graphical representation of the stress-strain behavior of a steel reinforced material such as the wire 28. The load to which the wire 28 is subjected is shown in kilo-newtons (kN) in ascending values on the Y-axis and the displacement in millimeters (mm) which the wire undergoes is shown in ascending values on the X-axis. As can be seen on plot of the stress-strain values, the wire will behave in an elastic manner so long as the yield point PL is not exceeded. However, when the limit PL is exceeded, the wire will no longer behave elastically, but, instead, will be plastically deformed and, in fact, will ultimately rupture as the stress-strain on the wire increases beyond the plastic limit.

The method of the present invention improves the useful life of a pneumatic tire such as the pneumatic tire 10 by significantly improving the endurance or fatigue resistance capability of the steel reinforced materials of the tire. This specific improvement is achieved by selectively imposing higher than normal stresses on the steel reinforced materials, be they in the form of single or multi strand wires or cables, in a manner such that the propagation of cracks along and into the reinforcement member is retarded or, possibly, eliminated. According to the method of the present invention, the higher than normal stress applied to the wire or cable is selectively applied during one or more application periods durationally spaced during the life of the tire and the length or duration of each application during which the higher than normal stress is applied is controlled to achieve the desired impact upon a growth characteristic of the crack. For example, the growth characteristic of the rate of growth of the crack or cracks in the wire may be desirably impacted in that this rate is retarded or slowed. The single stress application period, or each of the individual stress application periods in a series of multiple stress applications, occurs after the expiration of a tire running interval during which the tire has been in rolling contact with a ground surface and, thus, has been subjected to cyclic stresses to a degree that cracks have been initiated in the steel reinforced materials.

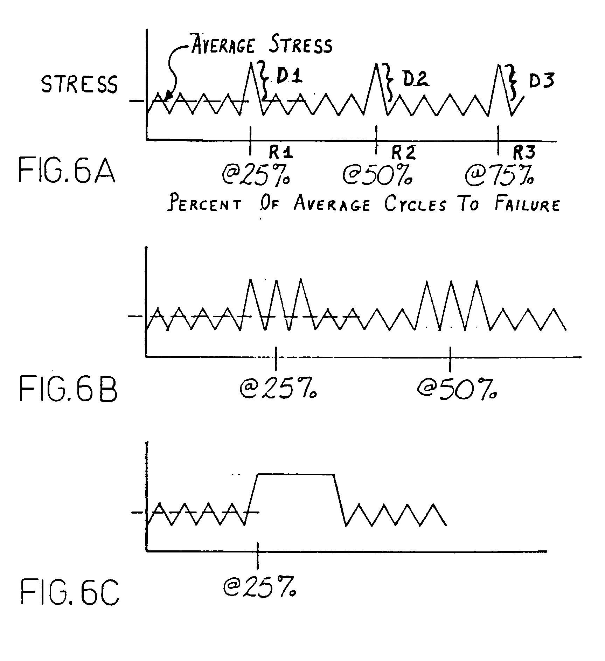

The stress application step of the method prescribes that the higher than normal stress applied to the steel reinforced material is to be a stress which preferably exceeds the average stress sustained by the elongate steel reinforcement during the cyclic loading and unloading of the reinforcement member as the tire travels in rolling contact with the ground surface. However, this higher than normal stress imparted to the wire or cable during the stress application step should not be of a magnitude which produces plastic deformation of the wire or cable - in other words, the higher the normal stress should not exceed the yield point PL of the particular wire or cable, which is graphically shown in Figure 3. As seen with respect to each of Figures 6A, 6B, and 6C (which will be discussed in more detail below), each treatment protocol for a wire or cable of a tire in accordance with the method of the present invention preferably involves the application of an overload stress OS which exceeds the average or normal stress yet which is less than a stress which would cause the wire to exceed its yield point.

Before a detailed discussion of several exemplary treatment protocols for implementing the inventive method, it may be helpful to briefly survey several possible mechanisms which may operate to produce the favorable retardation effects on the growth of cracks in the wire or cable reinforcement members. One possible mechanism is the creation by the overload stress of a residual compressive stress system which surrounds the tip of each crack in the treated wire or cable. This residual stress system acts against the stress applied at the stress tip from a time immediately following the application of the overload stress to a later time. During the time in which the residual stress system is in opposition to the stress applied at the crack tip, the rate of growth of the crack is slowed or retarded. However, once the crack has propagated through the region at which the residual stress system or field is located, the crack resumes its normal rate of growth.

Another possible mechanism which may yield the beneficial effects associated with the selective application of an overload stress according to the present inventive method is the mechanism of an overload stress which produces residual plastic deformation in the area of the tip of the crack to thereby effectively close the crack tip and prevent further propagation. A further possible mechanism is that the overload stress application "blunts" or rounds off the sharpness of the tip of the crack such that the stress concentration is spread over a greater area, thereby producing the peak stress.

It may also be speculated that the overload stress application causes strain hardening at the tip of the crack. Yet another possible mechanism is the creation of an irregular crack front that diverts or diminishes the concentration of stress which would otherwise be present at the crack tip.

The overload stress is to be applied to a cured tire such as the pneumatic tire 10 discussed with respect to Figure 2A. The method of the present invention advantageously does not preclude or preempt any normally desirable treatment of the steel reinforced material either prior to assembly of the reinforcement member with the elastomeric skim material to form the carcass ply, during assembly of the carcass ply with the other tire components to form an uncured or green tire, or during or after the curing of the uncured tire to form the cured tired. Thus, even a treatment or pre-treatment of the wire or cables for the similar purpose of combating fatigue failure of the wire or the application of a stress condition to the wire prior to its assembly with other components during the tire building process is not precluded by the use of the method of the present invention.

As noted, the application of a higher than normal stress may be applied once or at multiple intervals during the life of a tire. Preferably, the parameters of the application of a higher than normal stress will be optimized to best enhance the performance and endurance of a particular tire. A preferred protocol for optimizing the application of a higher than normal stress to a steel reinforced material in a cured tire in accordance with the present invention involves multiple applications of a higher than normal stress to the steel reinforced materials of a tire at preselected intervals with the preselected intervals being chosen as a function of the average number of (bending) cycles incurred by such a reinforcement material up to rupture or failure of the material due to fatigue resistance.

This preferred protocol involves the following steps. First, the particular steel reinforced materials of interest are selected. For example, it may be of interest to improve the fatigue resistance of the wires or cables comprised in the carcass ply of a pneumatic truck tire. Once the wire or cable of interest is selected, one determines an average number of cycles until failure or rupture of the wire. Such a determination may be made by, for example, actually observing fatigue rupture behavior of such wires of interest in tires themselves under normal load and driving conditions. This actual observation of the fatigue rupture of the wire or cable thus permits a determination of the actual or approximate number of cycles of loading and unloading which a wire or cable has sustained up to the fatigue rupture and this data can be used to create body of data from which an average number of cycles to failure can be calculated. Alternatively, one can selectively observe the rate of growth of cracks in the wire or cable of interest at a particular mileage of the truck tire and thereafter extrapolate or deduce the number of cycles which such wire or cable would sustain until failure. Again, this alternative approach would yield a body of data from which the average number of cycles to failure could be calculated. The observation of cracks in a wire or cable of interest as well as the measurement thereof may be accomplished by any suitable conventional crack observation technique such as, for example, a scanning electronic microscope or crack etching.

Yet another alternative approach is to estimate the number of cycles to failure based upon known or measurable characteristics of the wire or cable of interest. For example, one may reasonably simulate an actual in-tire fatigue situation by experimentally selecting a lower cyclic load and an upper cyclic load for the wire or cable of interest which produce a fatigue rupture within an acceptable period.

Once an average number of cycles to failure of the wire or cable of interest has been established, one then selects the tire running time intervals at which the higher than normal stress will be imposed on the wire of interest. Additionally, one selects an approach for imposing a higher than normal stress on the wire in its assembled disposition in the cured tire. For example, one may choose to impose an overinflation condition on the tire, and one selects the magnitude and other characteristics of the mean force to be imposed so as to create the higher than normal stress. Thereafter, the wire or cable of interest are subjected to the higher than normal stress at the preselected intervals and one measures or observes the improvement in the average number of cycles until the wire or cable of interest fails or ruptures.

As can be understood, the parameters of the protocol can be varied with the purpose of optimizing the increase in the number of cycles which the wire or cable of interest may sustain before failure without an unacceptable tradeoff or reduction in other desired characteristics of the wire or cable of interest. Once the selected protocol has led one to identify the parameters for optimizing the resistance to fatigue failure of the wire of interest such as, for example, the parameters of the number and duration of the tire running time intervals at whose expiration the higher than normal stress is applied, the magnitude of the higher than normal stress, and the method of applying the higher than normal stress, one may then apply these same protocol parameters to tires which are constructed with the wire and cable of interest to actually retard the growth of cracks in such wires and thereby improve the fatigue resistance of the tires.

According to the method of the present invention, a preferred approach to imparting a higher than normal stress to the steel reinforced materials of a tire is to inflate the tire in a controlled manner to an inflation pressure beyond a nominal pressure - this is referred to as the "overinflation" approach. The "overinflation" approach operates to apply a multi-directional force (though predominately a tensile force) on the individual wires 28 of the pneumatic tire 10, thereby creating higher than normal stresses on these wires for the prescribed duration of the stress application.

The term "nominal inflation pressure" is intended to mean the inflation gas pressure recommended for a tire or user operation in prescribed circumstances. For example, the term nominal inflation pressure may typically refer to the recommended air pressure for a tire based upon the load of a vehicle on the tire will be mounted. Several organizations such as Tire and Rim Association (T&RA), the Japanese Tire and Rim Association, and the European Tire and Rim Association regularly publish recommended air inflation pressures for tires. Unless otherwise noted therein, the term "nominal inflation pressure" shall mean the air pressure recommended according to a tire standards organization such as the T&RA for the tire of interest for the particular vehicle load and application.

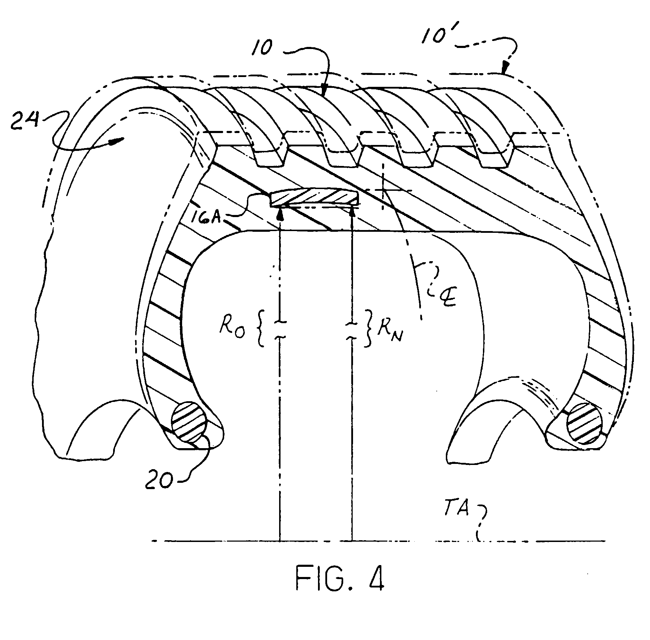

The "overinflation" of the pneumatic tire 10 operates to impart a predominately tensile force on each wire 28 in the following manner. As seen in Figure 2D, in which an incremental element 16A of the carcass ply 16 of Figure 2A is shown in enlarged form, it can be seen that the respective extents of at least a pair of the wires 28 extend through the carcass ply incremental element 16A. When the pneumatic tire 10 is inflated to its nominal pressure, the carcass incremental element 16A is at a nominal radius of curvature R_{N} relative to the tire axis TA. However, when additional inflation gas is introduced into the pneumatic tire 10 to create an overinflation condition, the profile of the pneumatic tire 10 changes from the profile shown in solid lines in Figure 4 to an overinflated profile 10', as seen in Figure 4. Likewise, the overinflation of the tire produces a change in the shape of the carcass ply incremental element 16A from its solid line shape to its dashed line shape as shown in Figure 2D. The magnitude of the overinflation of the pneumatic tire 10 is preferably in the range of from about 110 to 300% of the nominal inflation pressure of the tire. While the most effective or optimum overinflation value will vary depending upon the particular tire, it is to be noted that the overinflation of the tire in accordance with the present method is different from an inadvertent or even deliberate inflation of the tire slightly beyond its nominal inflation pressure. For example, an inflation of a tire to two (2) or three (3) percent beyond its nominal inflation pressure would not be within the scope of the present invention.

The effect of the overinflation gas pressure on the carcass ply incremental element 16A shown in Figure 2D and the overinflation tire profile 10' shown in Figure 4 is shown in an exaggerated manner and is not to scale. However, it can be seen that the inflation of the pneumatic tire 10 within the preferred overinflation range of 110 to 300% of the nominal inflation pressure effects a change in the radius of curvature of the wires 28 along their extents in the crown region of the tire under the tread portion 26 and this is representatively shown by the change in the radius of curvature of the carcass ply incremental element 16A in Figure 2D due to the overinflation condition. Specifically, the radius of curvature of each wire 28 in the crown region changes from the radius of curvature R_{N} to an overinflation radius of curvature R_{O}. This change in the radius of curvature is a manifestation of the fact that the overinflation condition has imposed forces on the wires 28 in a manner which creates higher than normal stresses on the wire, thus producing the noted beneficial crack growth retardation effect.

With particular reference to Figure 2E, it can be seen that, for example, the extent of each wire 28, as exemplarily illustrated in Figure 2D, is subjected to a tensile force F_{T} acting axially with respect to the wire. Additionally, depending upon the particular location of the extent of the wire 28 such as, for example, an extent of a wire located in the shoulder region 24 of the pneumatic tire 10 (as seen in Figure 4), the respective extent of the wire may be also be subjected to a compressive force F_{C} or a circumferential force F_{CI}, as seen in Figure 2E. However, the magnitude of the tensile force F_{T} is significantly greater than the magnitude of any compressive force F_{C} or any circumferential force F_{CI} which may be present.

The preferred protocol for optimizing the method of the present invention for a wire or cable of interest has, in fact, been actually validated by a study of several wires of varying diameters. Wires of 0.28 and 0.35 millimeters were selected to be the wires of interest for laboratory validation studies. Each of these wires was comprised of a carbon content designated according to the SAE 1069 standard for such wires. Each of the two wire diameters was obtained by initial purchase of commercially available wire having a diameter of 5.5 mm. Each 5.5 mm diameter wire was then drawn down to the respective 0.28 or 0.35 diameter dimension with appropriate heat treatment to effectuate the drawing down of the wire. Additionally, each wire underwent a brass coating step to administer a coating to the wire of the type typically used to improve wire-rubber adhesion and corrosion resistance properties. It is be noted that the selected wires of interest and their preparation from commercial stock for the validation studies are presumed to be representative of other wires to be used in tire reinforcement applications. For example, it is presumed that wires of 0.15 to 0.25 mm diameter or wires having a carbon content from 0.65 to 0.95 by weight percent would be susceptible also to the beneficial effects of the method of the present invention.

Two sets of trials were conducted with the 0.28 millimeter diameter wire; one trial set demonstrated that the average number of cycles until failure was increased to 19% while the other trial set demonstrated that the average number of cycles until failure was increased by 24%. A set of trials of 0.35 millimeter diameter wire demonstrated that the average number of cycles until failure was increased by 39%.

As seen in Tables I and II below, the trial sets of the 0.28 millimeter diameter wire yielded an increase in the number of cycles to failure. A 200 Hz cycling rate and an overload 120% of the base load were selected. The base load was selected at 120 newtons or N; thus, the overload at 120% of the base load 120 N was 144 N. Each wire was cyclic loaded between the base load of 120 N and a lower limit load of 20 N. The loading and unloading of each wire as well as the overloading of each wire was accomplished by securing the wire between two flat faced mechanical clamps and subjecting the wire to axial cyclic stressing of the magnitudes noted. As seen in Tables I and II, twelve passes of the wire were cycled between a lower cyclic load having a limit of 20 N to an upper cyclic load having a limit of 120 N and alternate passes (e.g., those passes at 25, 50, and 75% of the average number of cycles to failure) were subjected to an overload to create a higher than normal stress.

As seen in Table III below, the trial sets of the 0.35 millimeter diameter wire yielded an increase in the number of cycles to failure. A 200 Hz cycling rate and an overload 120% of the base load were selected. The base load was selected at 130 N; thus, the overload at 120% of the base load was 156 N. Each wire was cyclic loaded between the base load of 130 N and a lower limit load of 10 N.

As can be seen, for example, in Table I, in each instance where an overload was applied, the number of cycles until failure increased. For example, with pass #1 of the 0.28 millimeter diameter wire of this trial, the number of cycles until failure of the wire was 46722. In contrast, with pass #2 of the same wire, no overload was applied and the number of cycles to failure was 33812 - in other words, the wire failed after fewer cycles than the wire of pass #1.

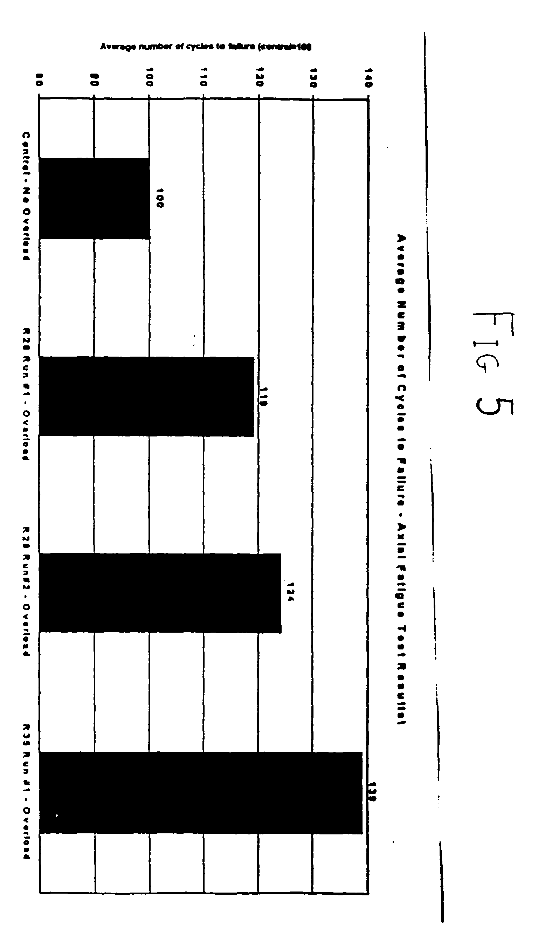

The results exhibited in Tables I, II and III are graphically represented in Figure 5, which is a graphical representation of the crack growth retardation benefits of the method of the present invention. The average number of cycles to failure of each wire of interest is scaled on the Y - axis on a normalized basis normalized to the average number of cycles of a control wire on which no overload force was imposed (the average number of cycles to failure of the control wire value = 100) and the individual wire values are arranged on the X - axis. Thus, it can be seen that the average fatigue life of the 0.28 mm diameter wire whose data is shown in Table I increased by 19% (e.g., - a value of 119 relative to the control wire value of 100); the average fatigue life of the 0.28 mm diameter wire whose data is shown in Table II increased by 24% (e.g., - a value of 124 relative to the control wire value of 100); and the average fatigue life of the 0.35 mm diameter wire whose data is shown in Table III increased by 39% (e.g., - a value of 139 relative to the control wire value of 100).

An overinflation of the pneumatic tire 10 can be accomplished in both a vehicle mounted disposition and a vehicle dismounted disposition such as, for example, during the course of, or in preparation for, a recapping or retreading operation. For example, a vehicle mounted disposition would be the mounting of the pneumatic tire 10 on a vehicle equipped with an appropriate onboard air inflation system. An onboard air inflation system for controlling the inflation or deflation of individual tires to selected nominal inflation pressures has been offered as an option on at least one commercially available vehicle. It can be imagined that an onboard air inflation system can be designed with appropriate features for safely and reliably inflating individual tires of a vehicle to overinflation conditions in accordance with the method of the present invention. Moreover, one can imagine that such an onboard air inflation system could be coupled with a PC-or chip-controlled processing unit which automatically without driver intervention inflates the individual tires of the vehicle into the prescribed overinflated condition.

Also in connection with an overload force application approach to implement the method, it is to be noted that pneumatic tires of the type typically mounted on medium to large trucks often undergo recapping or retreading at least once during their useful life. Recapping or retreading of a truck tire involves removal of the worn tread portion of the tire via, for example, grinding or buffing, and subsequent installation of a new tread portion on the original casing. The original casing comprises the carcass plies and the reinforcement belts and, depending upon the type of recapping or retreading approach may include the sidewall portions of the tire as well. In fact, it is not unusual for the casing of a truck tire to be recapped or retreaded two or three times during its useful life, thus providing significant savings in contrast to the need to mount a new tire two or three times in lieu of the retreaded or recapped tire. However, if the wires or cables in the carcass plies of the truck tire casing have become frayed or, in fact, have ruptured due to the cyclic fatigue phenomena, the casing is no longer suitable for recapping or retreading and must therefore be scrapped. In view of the fact that a truck tire will thus be demounted and handled at a recapping facility at several times during its useful life, it may be advantageous to coordinate the application force periods with those times at which the tire will be handled in a recapping or retreading process. Such a coordination would eliminate the necessity of separately demounting the tire solely to accomplish an overload application.

Figures 6A, 6B, and 6C each illustrate a respective overinflation protocol for introducing higher than normal stress to the steel reinforced material of tire in accordance with the method of the present invention. The tensile stress experienced by a wire or cable of interest is shown in relative terms on the Y-axis and the useful life of the tire is shown on the X-axis. The useful life of the tire is expressed in terms as a function of a predetermined average number of cycles until the predicted failure of the wire or cable of interest.

Each of the overinflation protocols illustrated in Figures 6A, 6B, and 6C prescribes a treatment approach which involves applying a tensile force to the steel reinforced material of a magnitude equal to that of a tensile force applied on the steel reinforced material when the tire is subjected to an inflation pressure greater than one hundred and ten percent (110%) of the nominal inflation pressure yet of a magnitude less than the tensile strength of the steel reinforced material and maintaining the application of the tensile force to the steel reinforced material for a predetermined period, whereby a characteristic of the growth of cracks in the steel reinforced material is altered. More specifically, each of these protocols includes applying a tensile force to the steel reinforced material includes inflating the tire to at least one hundred and ten percent (110%) of its nominal inflation pressure during a first overinflation period D1 after the tire has traveled in contact with a ground surface for a first tire running interval R1, maintaining the inflation of the tire at at least one hundred and ten percent (110%) of its nominal inflation pressure for a first predetermined duration during the first overinflation period D1, inflating the tire to at least one hundred and ten percent (110%) of its nominal inflation pressure after the tire has traveled in contact with a ground surface subsequent to the first overinflation period D1 upon the expiration of a second tire running interval R2, maintaining the inflation of the tire at at least one hundred and ten percent (110%) of its nominal inflation pressure for a second predetermined duration during the second overinflation period D2.

Each of the two overinflation protocols graphically represented in Figures 6A and 6B suggests an exemplary overinflation period D1 generally corresponding to the expiration of that particular tire running time interval R1 which equals the amount of tire running time necessary to impart 25% or 1/4 of the average number of cycles until failure to the wire or cable of interest. Additionally, each of the two protocols prescribe an exemplary second overinflation period D2 generally corresponding to the expiration of that particular tire running time R2 which equals the amount of tire running time necessary to impart a second 25% or 1/4 of the average number of cycles until failure to the wire or cable of interest following the first 25% of the average number of cycles to failure imparted during the tire running time interval R2. Thus, the second tire running time interval R2 expires at the expiration of the tire running time necessary to impart 50% of the average number of cycles to failure.

As seen in the one suggested overinflation protocol illustrated in Figure 6A, the protocol prescribes that a higher than normal stress be imparted to the wire or cable of interest when the tire has run for a first running tire interval i₁ (corresponding, as noted above, to approximately to 25% of the average number of cycles until the failure of the wire or cable). Additionally, the protocol prescribes that the overinflation of the tire be such as to impart an identical single application of an overload stress OS at each of the other overload application periods - i.e., at each of the two selected overinflation periods corresponding to 50% and 75%, respectively, of the average number of cycles until failure.

The magnitude of the overload stress is graphically represented by amplitude of the plot of the stress. As can be seen, the overload or higher than normal stress OS may be significantly greater than the average stress experienced by the wire or cable during the normal tire running or non-overinflation periods (the average stress experienced by the wire or cable is indicated by the dash line seen in Figure 6A). The overload stress OS applied to the wire or cable has preferably been pre-established in accordance with the overinflation parameter determination discussed previously and, thus, the overload stress OS should be that overload or higher normal stress that produces the optimum impact on the crack growth characteristic such as, for example, that particular stress which produces the maximum crack growth retardation.

Figure 6B graphically illustrates another overinflation protocol which prescribes multiple applications of a higher than normal stress at each overinflation period - i.e., at each of the selected overinflation periods corresponding to 25%, 50%, and 75% of the average number of cycles until failure. Note that while the amplitude, and thus, the magnitude, of these multiple higher than normal stresses are each individually greater than the average stress sustained by the wire or cable during tire running or non-overinflation, no one individual higher than normal stress has a magnitude equaling or greater than the single overload stress prescribed by the overinflation protocol illustrated in Figure 6A. As a variation, if the tire comprising the wire is to undergo a retreading or recapping operation, the inflation pressure of the tire may approach zero in connection with the overinflation period because the tire is demounted and deflated in preparation for the retreading operation. In this situation, as shown by the dash line in Figure 6B, the tire is inflated from nearly zero inflation pressure to the overload inflation pressure (after the overinflation period, the tire may again be returned to near zero inflation in connection with the retreading operation).

Figure 6C graphically illustrates a further overinflation protocol which prescribes a single relatively prolonged application of a higher than normal stress at a single overinflation period corresponding, for example, to 50% of the average number of cycles until failure. Alternatively, a single overinflation application can be administered after a tire has been cured into its final shape but prior to any actual rolling contact of the tire with a ground surface (i.e., prior to mounting of the tire on a vehicle). As a further variation, a first overinflation application may be applied after a tire has been cured into its final shape but prior to any actual rolling contact of the tire with a ground surface and then subsequent overinflation applications may follow during the life of the tire.

The above description is given in reference to a method for improving a tire of the type having a steel reinforced material and to a tire improved by the method. However, it is understood that many variations are apparent to one of ordinary skill in the art from a reading of the above specification and such variations are within the spirit and scope of the instant invention as defined by the following appended claims.

## Claims

1. A method for treating a steel reinforced material of a cured tire in which the steel reinforced material extends annularly relative to the axis of rotation of the tire, the tire being adapted for use on a vehicle at a prescribed nominal inflation pressure comprising:
applying a tensile force to the steel reinforced material of a magnitude equal to that of a tensile force applied on the steel reinforced material when the tire is subjected to an inflation pressure greater than one hundred and ten percent (110%) of the nominal inflation pressure yet of a magnitude less than the tensile strength of the steel reinforced material; and
maintaining the application of the tensile force to the steel reinforced material for a predetermined period, whereby a characteristic of the growth of cracks in the steel reinforced material is altered.

2. A method for treating a steel reinforced material of a cured tire according to claim 1, wherein the applying a tensile force to the steel reinforced material includes inflating the tire to at least one hundred and ten percent (110%) of its nominal inflation pressure.

3. A method for treating a steel reinforced material of a cured tire according to claim 2, wherein the applying a tensile force to the steel reinforced material includes inflating the tire to at least one hundred and ten percent (110%) of its nominal inflation pressure during a first overinflation period D1 after the tire has traveled in contact with a ground surface for a first tire running interval R1, the maintaining the application of the tensile force includes maintaining the inflation of the tire at at least one hundred and ten percent (110%) of its nominal inflation pressure for a first predetermined duration during the first overinflation period D1, the applying a tensile force to the steel reinforced material further includes inflating the tire to at least one hundred and ten percent (110%) of its nominal inflation pressure after the tire has traveled in contact with a ground surface subsequent to the first overinflation period D1 upon the expiration of a second tire running interval R2, and the maintaining the application of the tensile force further includes maintaining the inflation of the tire at at least one hundred and ten percent (110%) of its nominal inflation pressure for a second predetermined duration during the second overinflation period D2.

4. A method for treating a steel reinforced material of a cured tire in which the steel reinforced material extends annularly relative to the axis of rotation of the tire, the tire for supporting, at a prescribed nominal inflation pressure, a vehicle on a ground surface, comprising:
inflating the tire to a pressure of between about 110% to about 300% of its nominal inflation pressure for a predetermined overinflation period; and
returning the tire to its nominal inflation pressure at the expiration of the predetermined overinflation period.

5. A method for treating a steel reinforced material of a cured tire according to claim 1, and further comprising running the tire in contact with a ground surface after the returning of the tire to its nominal inflation pressure, subsequently inflating the tire to a pressure of between about 110% to about 300% of its nominal inflation pressure for a second predetermined overinflation period and returning the tire to its nominal inflation pressure at the expiration of the second predetermined overinflation period.

6. A tire of the type for supporting, at a prescribed nominal inflation pressure, a vehicle on a ground surface comprising:
at least one steel reinforced material whose fatigue resistance has been improved by inflating the tire to a pressure of between about 110% to about 300% of its nominal inflation pressure for a predetermined overinflation period and returning the tire to its nominal inflation pressure at the expiration of the predetermined overinflation period.
